# EUROPEAN PATENT APPLICATION

(11) **EP 4 783 699 A1**
(43) Date of publication of application: **29.07.2026**
(21) Application number: 23956310.9
(22) Date of filing: 23.10.2023
(51) Int. Cl.: H04W 72/1268

(54) **METHOD FOR SCHEDULED TRANSMISSION OF DATA AND COMMUNICATION APPARATUS**

(71) Applicant: HUAWEI TECHNOLOGIES CO., LTD., Shenzhen 518129 (CN)
(72) Inventor: YAO, Qi, Shenzhen, Guangdong 518129 (CN); WU, Shaoyun, Shenzhen, Guangdong 518129 (CN); XING, Weijun, Shenzhen, Guangdong 518129 (CN); XUE, Yifei, Shenzhen, Guangdong 518129 (CN)
(74) Representative: Pfenning, Meinig & Partner mbB
(86) International application number: PCT/CN2023/126014
(87) International publication number: WO 2025/086053

(57) **Abstract**

This application provides a data scheduling and transmission method and a communication apparatus. The method includes: An access network apparatus receives a first data packet from a user plane network function through a first general packet radio service tunneling protocol for a user plane GTP-U tunnel, where the first data packet includes scheduling indication information, and there is a correspondence between the scheduling indication information and a service type of the first data packet; and the access network apparatus sends a second data packet to a terminal apparatus based on the scheduling indication information, where the second data packet includes data of the first data packet. According to the data scheduling and transmission method, the access network apparatus may perform air interface transmission on a data packet of a service based on scheduling indication information that has a correspondence with a service type, so that differentiated air interface scheduling is performed on data based on the service type. This helps meet transmission requirements of different services in a communication system.

## Description

### TECHNICAL FIELD

This application relates to the field of communication technologies, and in particular, to a data scheduling and transmission method and a communication apparatus.

### BACKGROUND

In a communication system, different services may have different transmission requirements (for example, a latency requirement or a bandwidth requirement). For example, immersive interactive services represented by an extended reality (extended reality, XR) service have a transmission requirement of a high bandwidth and low latency.

How to meet the transmission requirements of the different services in the communication system in a data transmission process over an air interface needs to be further studied.

### SUMMARY

This application provides a data scheduling and transmission method and a communication apparatus, to implement differentiated air interface scheduling on data based on a service type. This helps improve flexibility of data transmission, and helps meet transmission requirements of different services in a communication system.

According to a first aspect, this application provides a data scheduling and transmission method. The method includes: An access network apparatus receives a first data packet from a user plane network function through a first general packet radio service tunneling protocol for a user plane GTP-U tunnel, where the first data packet includes scheduling indication information, and there is a correspondence between the scheduling indication information and a service type of the first data packet; and the access network apparatus sends a second data packet to a terminal apparatus based on the scheduling indication information, where the second data packet includes data of the first data packet.

Based on the method described in the first aspect, there is a correspondence between a service type of a service and scheduling indication information of service data. To be specific, service data of different service types may correspond to different scheduling indication information. Therefore, in a downlink data air interface transmission process, the access network apparatus may perform differentiated air interface scheduling on downlink data packets of different services based on scheduling indication information of different services. This helps improve flexibility of data transmission over an air interface, and helps meet transmission requirements of different services in a communication system.

In a possible implementation, the access network apparatus receives first indication information from a session management network function, where the first indication information indicates that scheduling and transmission are performed on a data packet transmitted through the first GTP-U tunnel based on the scheduling indication information. In this possible implementation, the session management network function indicates the access network apparatus to perform, based on the scheduling indication information, scheduling transmission on the data packet transmitted through the first GTP-U tunnel. This helps improve recognition of the access network apparatus on the scheduling indication information, and helps improve accuracy of performing scheduling transmission based on the scheduling indication information.

In a possible implementation, the access network apparatus receives an N2 session request message from the session management network function, where the N2 session request message includes first indication information. In this possible implementation, when establishing the first GTP-U tunnel between the access network apparatus and the user plane network function by using the N2 session request message, the session management network function further indicates the first indication information by using the N2 session request message. This helps improve efficiency of indicating the first indication information.

In a possible implementation, the access network apparatus receives second indication information from the session management network function, where the second indication information indicates to send congestion indication information to the user plane network function or the terminal apparatus when network congestion occurs. In this possible implementation, when network congestion occurs, the access network apparatus may notify the terminal apparatus or the user plane network function that network congestion occurs, thereby improving perception of the terminal apparatus or the user plane network function of whether a current network is congested.

In a possible implementation, the access network apparatus receives the N2 session request message from the session management network function, where the N2 session request message includes the second indication information. In this possible implementation, the access network apparatus may receive the second indication information by using the N2 session request message in a process of establishing the first GTP-U tunnel. This helps improve efficiency of receiving the second indication information.

In a possible implementation, the congestion indication information is included in a service data adaptation protocol SDAP layer or a GTP-U layer. In this possible implementation, a current communication protocol is slightly changed, and this is more conducive to implementation.

In a possible implementation, the GTP-U layer of the first data packet includes the scheduling indication information. In this possible implementation, the current communication protocol is slightly changed, and this is more conducive to implementation.

In a possible implementation, the scheduling indication information includes scheduling priority information and/or service type information.

In a possible implementation, the service type information is related to a scheduling configuration. In this possible implementation, the scheduling configuration is performed based on the service type information. This helps improve adaptation between the scheduling configuration and the service type.

According to a second aspect, this application provides a data scheduling and transmission method. The method includes: A user plane network function generates a first data packet, where the first data packet includes scheduling indication information, and there is a correspondence between the scheduling indication information and a service type of the first data packet; and the user plane network function sends the first data packet to an access network apparatus through a first general packet radio service tunneling protocol for a user plane GTP-U tunnel.

Based on the method provided in the second aspect, before transmitting the data packet through the first GTP-U tunnel, the user plane network function encapsulates, into the data packet, the scheduling indication information that has a correspondence with the service type, to indicate subsequent air interface transmission of a data packet of a service. Service data of different service types may correspond to different scheduling indication information. This helps improve flexibility of data transmission over an air interface, and helps meet transmission requirements of different services in a communication system.

In a possible implementation, the user plane network function receives third indication information from a session management network function, where the third indication information indicates to add the scheduling indication information to a data packet transmitted through the first GTP-U tunnel. In this possible implementation, the user plane network function adds, based on an instruction of the session management network function, the scheduling indication information to the data packet transmitted through a specific tunnel (for example, the first GTP-U tunnel mentioned in this application). This helps improve flexibility of adding the scheduling indication information by the user plane network function.

In a possible implementation, the user plane network function receives an N4 session establishment request message from the session management network function, where the N4 session establishment request message includes the third indication information. In this possible implementation, when establishing the first GTP-U tunnel between the access network apparatus and the user plane network function by using the N4 session establishment request message, the session management network function further indicates the third indication information by using the N4 session establishment request message. This helps improve efficiency of indicating the third indication information.

In a possible implementation, the user plane network function sends the data packet transmitted through the first GTP-U tunnel to a network data analysis function NWDAF network element. In this possible implementation, flexibility of obtaining the service type of the data packet is improved.

In a possible implementation, when a trigger condition is met, the user plane network function sends the data packet transmitted through the first GTP-U tunnel to the network data analysis function NWDAF network element, where the trigger condition includes: The user plane network function detects network congestion; or the user plane network function detects that a first time period is in progress. In this possible implementation, the user plane network function sends, to the NWDAF network element only when a condition is met, the data packet transmitted through the first GTP-U tunnel, thereby helping save communication resources and computing resources of the NWDAF network element.

In a possible implementation, the user plane network function sends the data packet transmitted through the first GTP-U tunnel to the network data analysis function NWDAF network element via the session management network function. In this possible implementation, flexibility of a manner in which the user plane network function sends the data packet to the NWDAF network element is improved.

In a possible implementation, the GTP-U layer of the first data packet includes the scheduling indication information. In this possible implementation, a current communication protocol is slightly changed, and this is more conducive to implementation.

In a possible implementation, the scheduling indication information includes scheduling priority information and/or service type information. In this possible implementation, the current communication protocol is slightly changed, and this is more conducive to implementation.

In a possible implementation, the service type information is related to a scheduling configuration. In this possible implementation, the scheduling configuration is performed based on the service type information. This helps improve adaptation between the scheduling configuration and the service type.

According to a third aspect, this application provides a method for determining data scheduling and transmission. The method includes: A session management network function obtains a service type corresponding to a first general packet radio service tunneling protocol for a user plane GTP-U tunnel; and the session management network function sends third indication information to a user plane network function based on the service type, where the third indication information indicates to add scheduling indication information to a data packet transmitted through the first GTP-U tunnel.

Based on the method described in the third aspect, the session management network function indicates, based on the service type, the user plane network function to add scheduling indication information to a data packet transmitted through a specific tunnel (for example, the first GTP-U tunnel mentioned in this application). There is a correspondence between the scheduling indication information and the service type. Service data of different service types may correspond to different scheduling indication information. The scheduling indication information indicates subsequent air interface transmission of a data packet corresponding to the service. This helps improve flexibility of data transmission over an air interface, and helps meet transmission requirements of different services in a communication system.

In a possible implementation, the session management network function sends an N4 session establishment request message to the user plane network function based on the service type, where the N4 session establishment request message includes the third indication information. In this possible implementation, when the session management network function establishes the first GTP-U tunnel between the access network apparatus and the user plane network function by using the N4 session request message, the session management network function further indicates the third indication information by using the N4 session establishment request message. This helps improve efficiency of indicating the third indication information.

In a possible implementation, the session management network function sends the first indication information to the access network apparatus based on the service type, where the first indication information indicates that scheduling and transmission are performed on the data packet transmitted through the first GTP-U tunnel based on the scheduling indication information.

In a possible implementation, the session management network function sends an N2 session request message to the access network apparatus based on the service type, where the N2 session request message includes the first indication information. In this possible implementation, when establishing the first GTP-U tunnel between the access network apparatus and the user plane network function by using the N2 session request message, the session management network function further indicates the first indication information by using the N2 session request message. This helps improve efficiency of indicating the first indication information.

In a possible implementation, the session management network function sends second indication information to the access network apparatus based on the service type, where the second indication information indicates to send congestion indication information to the user plane network function or a terminal apparatus when network congestion occurs. Implementing this possible implementation helps improve perception of a network congestion status by the user plane network function or the terminal apparatus.

In a possible implementation, the session management network function sends the N2 session request message to the access network apparatus based on the service type, where the N2 session request message includes the second indication information. In this possible implementation, when establishing the first GTP-U tunnel between the access network apparatus and the user plane network function by using the N2 session request message, the session management network function further indicates the second indication information by using the N2 session request message. This helps improve efficiency of indicating the second indication information.

In a possible implementation, the session management network function receives a session establishment request message from the terminal apparatus, where the session establishment request message includes service type indication information of a first service; and the session management network function establishes, based on the session establishment request message, the first GTP-U tunnel that is between the user plane network function and the access network apparatus and that corresponds to the first service. In this possible implementation, the session management network function may obtain, in a session establishment process, the service type corresponding to the first GTP-U tunnel by using the session establishment request message. This helps improve flexibility of the session management network function in obtaining the service type corresponding to the first GTP-U tunnel.

In a possible implementation, the service type indication information includes one or more of the following: network slice information of the first service, identification information of the first service, or information about a data network corresponding to the first service.

In a possible implementation, the session management network function receives fifth indication information from the network data analysis function NWDAF network element, where the fifth indication information indicates a service type of the data packet transmitted through the first GTP-U tunnel. In this possible implementation, the session management network function may obtain, by using the NWDAF network element after the session is established, the service type corresponding to the first GTP-U tunnel. This helps improve flexibility of the session management network function in obtaining the service type corresponding to the first GTP-U tunnel.

According to a fourth aspect, this application provides a communication apparatus. The apparatus may be an access network device, may be an apparatus in an access network device, or may be an apparatus that can be used in a matching manner with the access network device. Alternatively, the communication apparatus may be a chip system, and the communication apparatus may perform the method performed by the access network apparatus in the first aspect to the third aspect. A function of the communication apparatus may be implemented by hardware, or may be implemented by hardware executing corresponding software. The hardware or the software includes one or more units corresponding to the functions. The unit may be software and/or hardware. For operations performed by the communication apparatus and beneficial effect, refer to the methods and beneficial effect in the first aspect to the third aspect. Repeated parts are not described again.

According to a fifth aspect, this application provides a communication apparatus. The apparatus may be a user plane network function, an apparatus in a user plane network function, or an apparatus that can be used in a matching manner with a user plane network function. The communication apparatus may be a chip system, and the communication apparatus may perform the methods performed by the user plane network function in the first aspect to the third aspect, or the communication apparatus may perform the methods performed by the user plane network function in the first aspect to the third aspect. A function of the communication apparatus may be implemented by hardware, or may be implemented by hardware executing corresponding software. The hardware or the software includes one or more units corresponding to the functions. The unit may be software and/or hardware. For operations performed by the communication apparatus and beneficial effect, refer to the methods and beneficial effect in the first aspect to the third aspect. Repeated parts are not described again.

According to a sixth aspect, this application provides a communication apparatus. The apparatus may be a session management network function, an apparatus in a session management network function, or an apparatus that can be used in a matching manner with a session management network function. The communication apparatus may be a chip system. The communication apparatus may perform the methods performed by the session management network function in the first aspect to the third aspect, or the communication apparatus may perform the methods performed by the session management network function in the first aspect to the third aspect. A function of the communication apparatus may be implemented by hardware, or may be implemented by hardware executing corresponding software. The hardware or the software includes one or more units corresponding to the functions. The unit may be software and/or hardware. For operations performed by the communication apparatus and beneficial effect, refer to the methods and beneficial effect in the first aspect to the third aspect. Repeated parts are not described again.

According to a seventh aspect, this application provides a communication apparatus. The communication apparatus includes a processor. When the processor invokes a computer program in a memory, the method performed by the access network apparatus, the user plane network function, or the session management network function in the method according to the first aspect to the third aspect is performed.

In a possible design, the communication apparatus further includes the memory. Optionally, the processor and the memory are integrated together.

In a possible design, the communication apparatus further includes a transceiver, configured to receive or send a signal.

According to an eighth aspect, this application provides a communication apparatus. The communication apparatus includes a processor and an interface circuit. The interface circuit is configured to input and/or output a signal. The processor is configured to perform the method performed by the access network apparatus, the user plane network function, or the session management network function in the methods according to the first aspect to the third aspect by using a logic circuit or running computer-executable instructions.

In a possible implementation, the interface circuit is configured to receive a signal from another communication apparatus other than the communication apparatus and transmit the signal to the processor, or send a signal from the processor to another communication apparatus other than the communication apparatus.

According to a ninth aspect, this application provides a computer-readable storage medium. The computer-readable storage medium is configured to store computer-executable instructions. When the computer-executable instructions are executed, the method performed by the access network apparatus, the user plane network function, or the session management network function in the method according to the first aspect to the third aspect is performed.

According to a tenth aspect, this application provides a communication apparatus, where the communication apparatus includes a function or unit configured to perform the method according to any one of the first aspect to the third aspect.

According to an eleventh aspect, this application provides a computer program product including a computer program. When the computer program is executed, the method performed by the access network apparatus, the user plane network function, or the session management network function in the method in the first aspect to the third aspect is implemented.

According to a twelfth aspect, this application provides a communication system. The communication system includes a user plane network function and a session management network function. The user plane network function is configured to perform the method in the second aspect, and the session management network function is configured to perform the method in the third aspect.

In a possible implementation, the communication system further includes an access network apparatus, configured to perform the method according to the first aspect.

### BRIEF DESCRIPTION OF DRAWINGS

FIG. 1 is a diagram of a network system architecture according to an embodiment of this application;
FIG. 2 is a diagram of a structure of a CN 200 according to an embodiment of this application;
FIG. 3 is a diagram of transmission of downlink data between protocol layers according to an embodiment of this application;
FIG. 4 is a schematic flowchart of interaction of a data scheduling and transmission method according to an embodiment of this application;
FIG. 5 is a schematic flowchart of interaction of another data scheduling and transmission method according to an embodiment of this application;
FIG. 6 is an interaction diagram in which a session management network function obtains a service type corresponding to a first GTP-U tunnel according to an embodiment of this application;
FIG. 7 is another interaction diagram in which a session management network function obtains a service type corresponding to a first GTP-U tunnel according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

To make the objectives, technical solutions, and advantages of this application clearer, the following further describes this application in detail with reference to the accompanying drawings.

Terms "first", "second", and the like in this specification, the claims, and the accompanying drawings of this application are used to distinguish between different objects, but are not used to describe a specific sequence. In addition, the terms "including" and "having" and any other variants thereof are intended to cover non-exclusive inclusion. For example, a process, a method, a system, a product, or a device that includes a series of operations or units is not limited to the listed operations or units, but optionally further includes an unlisted operation or unit, or optionally further includes another inherent operation or unit of the process, the method, the product, or the device.

"Embodiments" mentioned in the specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe a correspondence relationship between corresponding objects, and indicates that there may be three relationships. For example, "A and/or B" may indicate the following three cases: Only A exists, only B exists, and both A and B exist, where A and B may be singular or plural. The character "/" usually represents an "or" relationship between corresponding objects. "At least one of the following items (pieces)" or a similar expression thereof indicates any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

To better understand embodiments of this application, the following first describes a system architecture in embodiments of this application.

Embodiments of this application may be applied to a wireless communication system like a long term evolution (long term evolution, LTE) system, a 5th generation mobile communication (5th generation mobile communication, 5G) system, a communication system evolved after 5G, for example, a 6th generation mobile communication (6th generation mobile communication, 6G) system, a satellite communication system, or a short-range communication system. The wireless communication system mentioned in embodiments of this application includes but is not limited to three application scenarios of the 5G/6G mobile communication system: enhanced mobile broadband (enhanced mobile broadband, eMBB), ultra-reliable low-latency communication (ultra-reliable low-latency communication, URLLC), massive machine-type communication (massive machine-type communication, mMTC), a long range (long range, LoRa) internet of things system, or an internet of vehicles system.

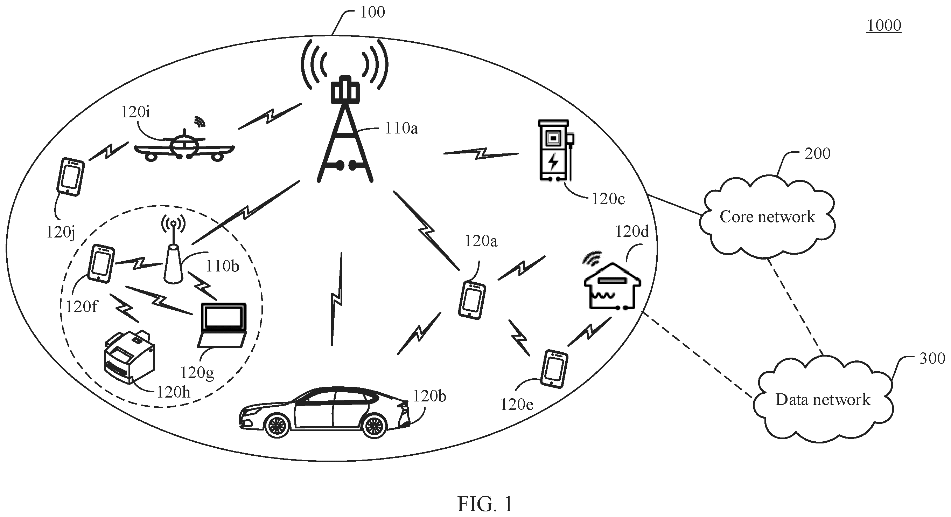

The following uses a system architecture shown in FIG. 1 as an example for description. As shown in FIG. 1, a communication system 1000 includes a radio access network (radio access network, RAN) 100 and a core network (core network, CN) 200. The RAN 100 includes at least one access network apparatus (110a and 110b in FIG. 1, collectively referred to as 110) and at least one terminal apparatus (120a to 120j in FIG. 1, collectively referred to as 120). The RAN 100 may further include another RAN node, for example, a wireless relay device and/or a wireless backhaul device (not shown in FIG. 1). The terminal apparatus 120 is connected to the access network apparatus 110 in a wireless manner. The access network apparatus 110 is connected to the CN 200 in a wireless or wired manner. A core network device (or referred to as a network function) in the CN 200 and the access network apparatus 110 in the RAN 100 may be different physical devices, or may be a same physical device that integrates a logical function of the core network and a logical function of the radio access network. Optionally, the communication system 1000 may further include a data network (data network, DN) 300. A plurality of application servers corresponding to a plurality of services may be deployed in the DN 300, to provide a plurality of possible services for the terminal apparatus.

The following describes in detail the terminal apparatus, the RAN, and the CN in the system architecture.

### 1. Terminal apparatus

The terminal apparatus is an apparatus having a wireless transceiver function, may be a device that can provide voice or data connectivity for a user, and may send a signal to a base station or receive a signal from the base station. The terminal apparatus may also be referred to as a terminal device, user equipment (user equipment, UE), a mobile station, a mobile terminal, or the like. The terminal apparatus may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, a smart grid, smart furniture, a smart office, a smart wearable, smart transportation, and a smart city. The terminal apparatus may be a mobile phone, a tablet computer, a computer with a wireless transceiver function, a smart point of sale (point of sale, POS) terminal, customer-premises equipment (customer-premises equipment, CPE), a wearable device (for example, a smartwatch, a smart band, a pedometer, or smart glasses), a vehicle, a flight device (for example, a smart robot, a hot air balloon, an uncrewed aerial vehicle, or an aircraft), a vessel (for example, a ship), a robot, a mechanical arm, a smart home device (for example, a refrigerator, a television, an air conditioner, or an electricity meter), or the like. Alternatively, the terminal apparatus may be a vehicle apparatus, for example, an entire vehicle apparatus, an in-vehicle module, an in-vehicle chip, an on board unit (on board unit, OBU), or a telematics box (telematics box, T-BOX). The terminal apparatus may alternatively be a road side unit (road side unit, RSU), a chip, or the like. A specific technology and a specific device form that are used by the terminal apparatus are not limited in embodiments of this application.

### 2. RAN

The RAN 100 may be an evolved universal terrestrial radio access (evolved universal terrestrial radio access, E-UTRA) system, a new radio (new radio, NR) system, and an NR evolved radio access system defined in the 3rd generation partnership project (3rd generation partnership project, 3GPP). The RAN 100 may further include the foregoing two or more different radio access systems. The RAN 100 may alternatively be an open radio access network (open RAN, O-RAN), a cloud radio access network (cloud radio access network, CRAN), or the like. The RAN 100 may alternatively be a communication system that integrates the foregoing two or more systems.

The RAN may include one or more RAN nodes, which are also referred to as access network apparatuses, RAN entities, or access nodes. A plurality of access network apparatuses 110 in the communication system 1000 may be nodes of a same type, or may be nodes of different types. In some scenarios, roles of the access network apparatus 110 and the terminal apparatus 120 are relative. For example, the network element 120i in FIG. 1 may be a helicopter or an uncrewed aerial vehicle, and may be configured as a mobile access network apparatus. For the terminal apparatus 120j that accesses the RAN 100 by using the network element 120i, the network element 120i is an access network apparatus. However, for the access network apparatus 110a, the network element 120i is a terminal apparatus. The access network apparatus 110 and the terminal apparatus 120 are sometimes both referred to as communication apparatuses. For example, the network elements 110a and 110b in FIG. 1 may be understood as communication apparatuses having an access network apparatus function, and the network elements 120a to 120j may be understood as communication apparatuses having a terminal function.

In a possible scenario, the access network apparatus may be a base station (base station), an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a mobile communication system evolved after 5G such as 6G, a base station in a future mobile communication system, a satellite, an integrated access and backhaul (integrated access and backhaul, IAB) node, or an access network apparatus in a mobile switching center non-terrestrial network (non-terrestrial network, NTN) communication system, that is, may be deployed on a high-altitude platform or a satellite. The access network apparatus may be a macro base station (for example, 110a in FIG. 1), a micro base station or an indoor station (for example, 110b in FIG. 1), a relay node or a donor node, or a wireless controller in a CRAN scenario. The access network apparatus may alternatively be a device that functions as a base station in device-to-device (device to device, D2D) communication, vehicle-to-everything communication, uncrewed aerial vehicle communication, or machine communication. Optionally, the access network apparatus may alternatively be a server, a wearable device, a vehicle, an in-vehicle device, or the like. For example, an access network apparatus in a vehicle-to-everything (vehicle-to-everything, V2X) technology may be a road side unit (road side unit, RSU).

In another possible scenario, a plurality of access network apparatuses cooperate with each other to assist the terminal in implementing wireless access, and different access network apparatuses respectively implement some functions of the base station. For example, the access network apparatus may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network apparatus may be a CU node, a DU node, or a device including a CU node and a DU node. In addition, the CU may be classified as an access network apparatus in the access network RAN, or the CU may be classified as an access network apparatus in the core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the access network apparatus is not limited. An apparatus configured to implement a function of the access network apparatus may be the access network apparatus, or may be an apparatus that can support the access network apparatus in implementing the function, for example, a chip system. The apparatus may be mounted in an access network apparatus or used in a manner matching the access network apparatus.

### 3. CN

The CN 200 may include one or more CN devices, which may also be referred to as network element devices, network elements, or network functions (network function, NF). In the following, the CN devices are collectively referred to as network functions (for example, a user plane network function and a session management network function in the following).

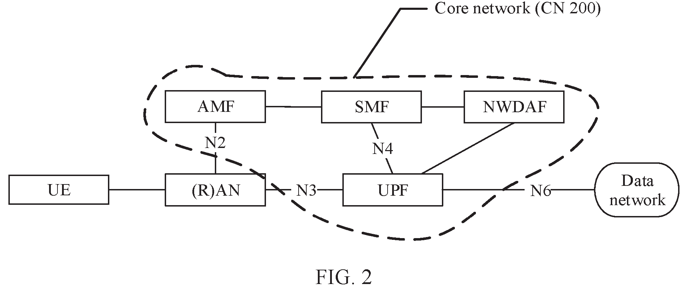

FIG. 2 is a diagram of a structure of the CN 200 according to this application. The CN 200 shown in FIG. 2 includes a plurality of network functions: an access and mobility management function (access and mobility management function, AMF), a session management function (session management function, SMF), a user plane function (user plane function, UPF), and a network data analysis function (network data analysis function, NWDAF). It may be understood that the CN 200 in FIG. 2 may further include another network function (not shown in FIG. 2), for example, a policy control function (policy control function, PCF) or unified data management (unified data management, UDM).

The AMF is mainly used for mobility management and access management, and is responsible for transmitting a user policy between user equipment and a policy control function (policy control function, PCF), and the like. For example, the AMF includes functions such as mobility status management, temporary user identity allocation, and user authentication and authorization.

The SMF is a control plane function, and is mainly responsible for managing a protocol data unit (protocol data unit, PDU) session of the terminal apparatus. The PDU session is a channel used to transmit a PDU, and the terminal apparatus and the DN transmit the PDU to each other by using the PDU session. The SMF is responsible for establishment, maintenance, deletion, and the like of the PDU session. The SMF includes functions related to a session, for example, session management (for example, session establishment, modification, and release, including tunnel maintenance between the UPF and the RAN), selection and control of the UPF, service and session continuity (service and session continuity, SSC) mode selection, and roaming.

The UPF is mainly used for user plane-related functions such as data packet routing and transmission, packet detection, quality of service (quality of service, QoS) processing, uplink packet detection, and downlink data packet storage.

The NWDAF may be configured to collect data from a network element, a network function, an application function (application function, AF) server, and an operation, administration and maintenance (operation, administration, and maintenance, OAM) system, analyze the data by using solutions such as machine learning and artificial intelligence, and feed back the data to the network element, the network function, the AF server, and the like to optimize network or service configuration. This provides better network quality and service experience.

The PCF is mainly configured to manage user subscription data, policy control, charging policy control, QoS control, and the like, and is mainly configured to provide a policy of the PDU session for the SMF network element. The policy may include a charging-related policy, a QoS-related policy, an authorization-related policy, and the like.

The UDM is mainly configured to manage subscription data and authentication data of a user, and perform authentication credit processing, user identifier processing, access authorization, registration/mobility management, subscription management, short message management, and the like. In some embodiments, the UDM may further include a unified data repository (unified data repository, UDR). The UDR is configured to: store and retrieve a PCF policy, store and retrieve structured data for exposure, store user information requested by the application function, and the like.

It should be noted that, in the 5G communication system, each network function mentioned in this application may be a name of each network function shown in FIG. 2. In a communication system evolved after 5G (for example, a 6G communication system), each network function may still have a name of each network function shown in FIG. 2, or may have another name. For example, in the 5G communication system, the user plane network function may be the UPF, and in the communication system evolved after 5G (for example, the 6G communication system), the user plane network function may still be the UPF, or may have another name. This is not limited in this application.

It should be further noted that, in the 5G communication system, functions implemented by the network functions may be independent as shown in FIG. 2. In the communication system evolved after 5G (for example, the 6G communication system), the network functions may still be in an independent state as shown in FIG. 2, or functions of a plurality of network functions in FIG. 2 may be implemented by an integrated network function. For example, in the 5G communication system, the user plane-related function is implemented by the UPF, and an access and mobility management-related function is implemented by the AMF. In the communication system evolved after 5G (for example, the 6G communication system), the user plane-related function may still be implemented by the UPF, and the access and mobility management-related function may still be implemented by the AMF, or may be implemented by an integrated network function. This is not limited in this application.

In FIG. 2, N2, N3, N4, and N6 are interface sequence numbers. For meanings of these interface sequence numbers, refer to meanings defined in related standard protocols. This is not limited herein.

To better understand the solutions provided in this application, the following further describes a protocol layer structure.

Communication between the terminal apparatus and the access network apparatus complies with a specific protocol layer structure, and communication between the access network apparatus and the network function (for example, the UPF) of the core network also needs to comply with a specific protocol layer structure. For example, a user plane protocol layer structure (which may be understood as a user plane protocol layer structure for air interface transmission) between the access network apparatus and the terminal apparatus includes: a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a first physical layer (physical layer, PHY) layer. A user plane protocol layer structure (which may be understood as a user plane protocol structure for wired transmission) between the access network apparatus and the network function of the core network includes: a general packet radio service tunneling protocol for the user plane (general packet radio service tunneling protocol for the user plane, GTP-U), a user datagram protocol (user datagram protocol, UDP), an internet protocol (internet protocol, IP), a data link layer (referred to as L2 below), and a second physical layer (referred to as L1 below).

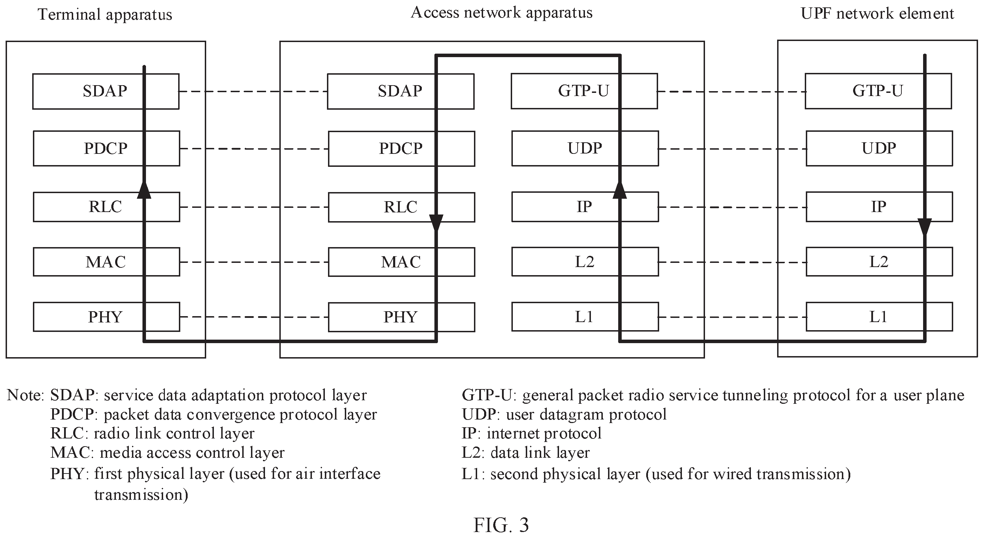

Downlink data transmission is used as an example. FIG. 3 is a diagram of transmission of downlink data between protocol layers. In FIG. 3, a downward arrow indicates data sending, and an upward arrow indicates data receiving. In FIG. 3, on a UPF side, data sequentially undergoes GTP-U processing, UDP processing, IP processing, L2 processing, and L1 processing. The UPF transmits the data to the access network apparatus. On an access network apparatus side, the data is first processed by using a wired transmission protocol, and the data sequentially undergoes L1 processing, L2 processing, IP processing, UDP processing, and GTP-U processing. Then, on an access network apparatus side, the data is processed by using an air interface transmission protocol, and the data sequentially undergoes SDAP layer processing, PDCP layer processing, RLC layer processing, MAC layer processing, and PHY layer processing. Further, the access network apparatus transmits the data to the terminal apparatus through air interface transmission. The data is processed on the terminal apparatus side by using an air interface transmission protocol, where PHY layer processing, MAC layer processing, RLC layer processing, PDCP layer processing, and SDAP layer processing are sequentially performed. A process of uplink data transmission is opposite to a direction indicated by the arrow in FIG. 3, and details are not described herein again.

The following describes functions of some protocol layers in this application by using a protocol layer in 5G as an example.

### (1) SDAP

An SDAP layer is located above a PDCP layer, and directly carries an IP data packet of a user plane. Functions of the SDAP layer include but are not limited to: processing mapping between a QoS flow and a data radio bearer (data radio bearer, DRB), and adding a data quality of service flow identifier (QoS flow indicator, QFI) to a data packet.

### (2) GTP-U

A general packet radio service (general packet radio service, GPRS) is a wireless packet switching technology based on a global system for mobile communications (global system for mobile communications, GSM), and provides an end-to-end wide area wireless IP connection. A GPRS tunneling protocol (GPRS tunneling protocol, GTP) is a group of IP-based communication protocols, which are used to carry packet radio services in GSM, Universal Mobile Telecommunications System (Universal Mobile Telecommunications System, UMTS), LTE, and NR networks. The GTP includes a control plane protocol (also referred to as GTP-C) and a user plane protocol (GTP-U). The GTP-U is used to carry user data in the core network and between the core network and the access network. A payload (payload) in the GTP-U refers to an original data packet of a user, for example, an IP data packet or an Ethernet data packet.

In a communication system, services of different service types may have different transmission requirements. In a process of air interface transmission, how to meet the transmission requirements of the different service types is an urgent problem to be resolved. This application provides a data scheduling and transmission method, to help implement differentiated transmission (or understood as scheduling) of data based on a service type in an air interface transmission process, thereby helping meet transmission requirements of different services in a communication system. The following further describes, with reference to the accompanying drawings, the data scheduling and transmission method and the communication apparatus provided in this application.

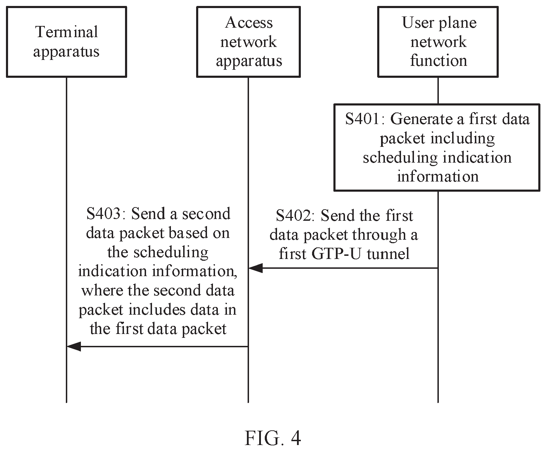

FIG. 4 is a schematic flowchart of interaction of a data scheduling and transmission method according to an embodiment of this application. As shown in FIG. 4, the data scheduling and transmission method includes the following S401 to S403. The method shown in FIG. 4 may be performed by an access network apparatus, a user plane network function, and a session management network function. It may be understood that the execution body of the method shown in FIG. 4 is merely an example, and should not be considered as a specific limitation on this application. For example, the method shown in FIG. 4 may alternatively be performed by a chip or module of an access network apparatus, a chip or module of a user plane network function, and a chip or module of a session management network function.

S401: The user plane network function generates a first data packet. The first data packet includes scheduling indication information, and there is a correspondence between the scheduling indication information and a service type of the first data packet.

It should be noted that the user plane network function mentioned in this application may be the foregoing UPF network element, or may be an apparatus that is in another communication system and that is configured to implement the user plane network function. The user plane network function includes but is not limited to a data processing and forwarding function. The session management network function mentioned in this application may be the foregoing SMF network element, or may be an apparatus that is in another communication system and that is configured to implement the session management network function. This is not specifically limited in this application.

A first GTP-U tunnel mentioned in this application is a tunnel used to transmit a data packet of a first service, and two tunnel endpoint identifiers (tunnel endpoint identifier, TEID) of the first GTP-U tunnel respectively indicate the user plane network function and the access network apparatus mentioned in this application. The user plane network function is an apparatus indicated by an uplink TEID of the first GTP-U tunnel. The access network apparatus sends uplink data of the first service to the user plane network function based on the uplink TEID. The access network apparatus is an apparatus indicated by a downlink TEID of the first GTP-U tunnel; and the user plane network function sends downlink data of the first service to the access network apparatus based on the downlink TEID. It may be understood that a same access network apparatus may establish a plurality of GTP-U tunnels with a same user plane network function (or different user plane network functions), and a same user plane network function may also establish a plurality of GTP-U tunnels with a same access network apparatus (or different access network apparatuses). In this case, tunnel information that indicates the GTP-U tunnel may further include an IP address of a tunnel endpoint indicated by a TEID in addition to the TEID. To be specific, the access network apparatus sends the uplink data of the first service to the user plane network function based on the uplink TEID of the first GTP-U tunnel and an IP address of the user plane network function corresponding to the first GTP-U tunnel. The user plane network function sends the downlink data of the first service to the access network apparatus based on the downlink TEID and an IP address of the access network apparatus corresponding to the first GTP-U tunnel.

In other words, in a process in which the terminal apparatus performs the first service, the user plane network function receives a data packet of the first service from a DN or an application (application, APP), and the data packet is to be transmitted to the access network apparatus serving the terminal apparatus through the first GTP-U tunnel. In this case, the user plane network function adds, to the data packet, the scheduling indication information corresponding to the service type of the first service, and generates the first data packet.

In a possible implementation, the GTP-U layer of the first data packet includes the scheduling indication information. In other words, after receiving the data packet of the first service, the user plane network function processes the data packet at the GTP-U layer, and encapsulates the scheduling indication information into a GTP-U layer header of the data packet.

In a possible implementation, the scheduling indication information includes scheduling priority information and/or service type information.

The scheduling priority information may be understood as indicating a transmission priority. For example, a transmission priority of a service type 1 is higher than a transmission priority of a service type 2. If a data packet of the service type 1 and a data packet of the service type 2 are received at the same time, a data packet of a service 1 (whose service type is the service type 1) is transmitted first, and then a data packet of a service 2 (whose service type is the service type 2) is transmitted. For example, in a case of network congestion, only the data packet of the service type 1 may be transmitted, and the data packet of the service type 2 is discarded.

Alternatively, the scheduling priority information may be understood as indicating a resource allocation priority. For example, a resource allocation priority of the service type 1 is higher than a resource allocation priority of the service type 2. Resources are first allocated to a data packet for processing the service 1 (whose service type is the service type 1), and then resources are allocated to a data packet for processing the service 2 (whose service type is the service type 2). When the resources are limited, the resources may be allocated only to the data packet for processing the service 1. In a possible implementation, the scheduling priority information may be represented by a value indicated by a plurality of bits (bit). For example, the scheduling priority information is represented by 4 bits, where 0001 indicates that a priority is a level 1, 0010 indicates that a priority is a level 2, ..., and 1111 indicates that a priority is a level 15. It may be predefined (or configured) in a protocol that a smaller value of the priority indicates a higher priority (that is, the level 1 is the highest priority, and the level 15 is the lowest priority), or it may be predefined (or configured) that a larger value of the priority indicates a higher priority (that is, the level 1 is the lowest priority, and the level 15 is the highest priority). This is not limited in this application.

The service type information is related to the scheduling priority information and/or a scheduling configuration, and the scheduling configuration includes a resource allocation configuration, a transmission resource configuration, or the like. For example, different service types correspond to different resource allocation configuration information (including information indicating a resource allocation priority). After receiving the data packet, the access network apparatus may determine resource allocation configuration information of the data packet based on the service type of the data packet and a correspondence between the service type and the resource allocation configuration information. For another example, different service types correspond to different transmission resource configuration information (including information indicating a transmission priority). After receiving the data packet, the access network apparatus may determine transmission resource configuration information of the data packet based on the service type of the data packet and the correspondence between the service type and the transmission resource configuration information. In a possible implementation, the service type information may be represented by a value indicated by a plurality of bits or a plurality of enumerated values. For example, the service type information is represented by 4 bits, where 0001 indicates an XR service, 0010 indicates a voice service, 0011 indicates an SMS service, and so on. In this case, the protocol may predefine (or configure) that, in the value indicated by the plurality of bits (or the plurality of enumerated values), a smaller value (or a smaller enumerated value) indicated by a bit corresponding to a service type indicates a higher priority of the service type. In other words, a scheduling priority corresponding to the XR service is the highest, a scheduling priority corresponding to the voice service is the second highest, and the rest may be deduced by analogy. Alternatively, the protocol may predefine (or configure) that, in the value indicated by the plurality of bits (or the plurality of enumerated values), a larger value (or a larger enumerated value) indicated by a bit corresponding to a service type indicates a higher priority of the service type. This is not limited in this application.

S402: The user plane network function sends the first data packet to the access network apparatus through a first GTP-U tunnel. Correspondingly, the access network apparatus receives the first data packet from the user plane network function through the first GTP-U tunnel.

In a possible implementation, after generating the first data packet, the user plane network function sends, to the access network apparatus corresponding to the first GTP-U tunnel, the first data packet based on a downlink TEID and an IP address of the access network apparatus.

S403: The access network apparatus sends a second data packet to the terminal apparatus based on the scheduling indication information, where the second data packet includes data in the first data packet.

It should be understood that the second data packet includes the data in the first data packet. In other words, a payload (Payload) of the second data packet is the same as a payload of the first data packet.

To be specific, the access network apparatus receives the first data packet, and obtains the scheduling indication information of the first data packet through parsing. Further, the access network apparatus generates the second data packet based on the payload of the first data packet and a protocol between the terminal apparatus and the access network apparatus, and sends the second data packet to the terminal apparatus.

For example, a terminal apparatus 1 is performing a service 1, a terminal apparatus 2 is performing a service 2, an access network apparatus *1 serves both the terminal apparatus 1 and the terminal apparatus 2, the service 1 corresponds to a service type 1, and the service 2 corresponds to a service type 2. When the access network apparatus *1 receives a downlink data packet A1 of the service 1 through a GTP-U tunnel #1, and receives a downlink data packet B2 of the service 2 through a GTP-U tunnel #2, if a scheduling priority of the downlink data packet A1 is higher than a scheduling priority of the downlink data packet B2, the access network apparatus *1 first allocates a transmission resource to the downlink data packet A1, and then allocates a transmission resource to the downlink data packet B2; or the access network apparatus *1 first transmits the downlink data packet A1, and then transmits the downlink data packet B2.

In a possible implementation, in a case of network congestion, the access network apparatus may further send congestion indication information to the user plane network function corresponding to the first GTP-U tunnel, so that the user plane network function sends the congestion indication information to a server (or an APP) that provides the first service, and/or the access network apparatus may further send the congestion indication information to the terminal apparatus. In this implementation, after learning that a network is congested, the terminal apparatus and/or the server that provides the first service may adjust a data transmission policy (for example, suspend sending, or the like) of the first service.

Example 1: The access network apparatus generates an uplink data packet whose payload is empty, and adds the congestion indication information to a layer header of a GTP-U layer of the uplink data packet; or the access network apparatus adds the congestion indication information to a layer header of a GTP-U layer of an uplink data packet after receiving the uplink data packet that is to be transmitted through the first GTP-U tunnel. Further, the access network apparatus sends the uplink data packet carrying the congestion indication to the user plane network function.

Example 2: The access network apparatus generates a downlink data packet whose payload is empty, and adds congestion indication information to a layer header of an SDAP layer of the downlink data packet; or the access network apparatus adds the congestion indication information to a layer header of an SDAP layer of a downlink data packet after transmitting the downlink data packet through the first GTP-U tunnel. Further, the access network apparatus sends the downlink data packet carrying the congestion indication to the terminal apparatus.

In conclusion, in the data scheduling and transmission process described in FIG. 4, the access network apparatus may transmit a downlink data packet of a service based on scheduling indication information that has a correspondence with a service type, so that differentiated air interface scheduling is performed on data based on the service type. This helps improve flexibility of data transmission, and helps meet transmission requirements of different services in a communication system.

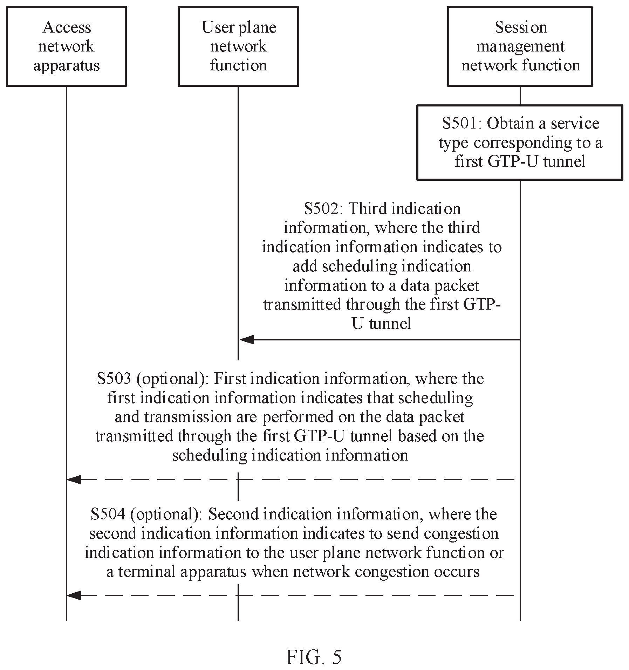

Based on the schematic flowchart shown in FIG. 4, this application further provides an embodiment shown in FIG. 5. That is, the schematic flowchart shown in FIG. 4 further includes S501 to S504. In an embodiment in which FIG. 4 and FIG. 5 are combined, S502 is performed before S401.

S501: The session management network function obtains the service type corresponding to the first GTP-U tunnel.

The first GTP-U tunnel is a tunnel used to transmit the data packet of the first service. The session management network function may obtain, before the first GTP-U tunnel is established, the service type (that is, the service type of the first service) corresponding to the first GTP-U tunnel, thereby helping improve efficiency of obtaining the service type of the first service by the session management network function. In this way, all data packets of the first service can be scheduled based on the scheduling indication information of the first service, thereby helping meet a transmission requirement of the first service. Alternatively, after the first GTP-U tunnel is established, the session management network function may obtain, based on a current network transmission status (for example, when network congestion occurs), the service type corresponding to the first GTP-U tunnel, thereby helping reduce signaling overheads. The following provides detailed descriptions in the following two cases.

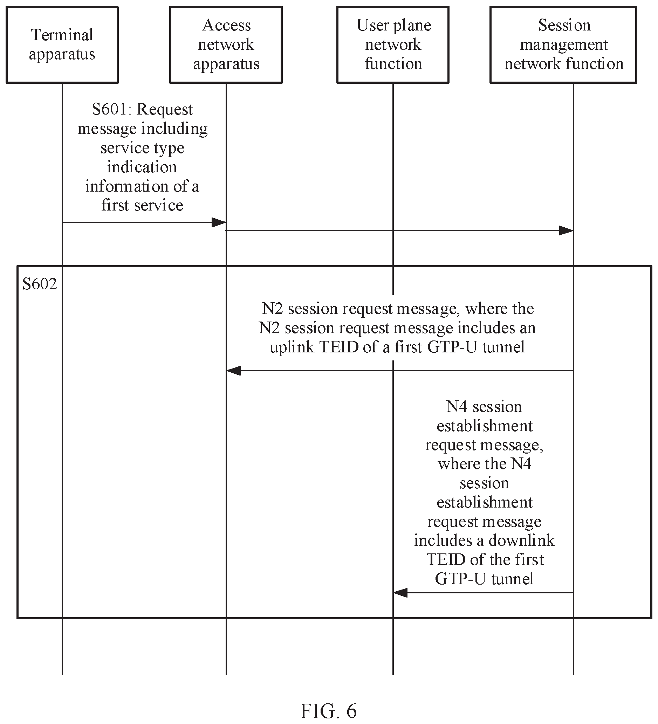

Case 1: The session management network function obtains, before the first GTP-U tunnel is established, the service type corresponding to the first GTP-U tunnel. Specifically, refer to FIG. 6.

S601: The session management network function receives a request message from the terminal apparatus, where the request message includes the service type indication information of the first service.

The request message is used to establish a session; or the request message is used to establish a transmission channel between the terminal apparatus and a DN, and the transmission channel includes a DRB between the terminal apparatus and the access network apparatus and a GTP-U tunnel between the access network apparatus and the user plane network function. In an implementation, the request message is a session establishment request message.

When the terminal apparatus has a requirement for performing the first service, the terminal apparatus sends the request message to the session management network function via the access network apparatus, where the request message includes the service type indication information of the first service. The service type indication information of the first service includes one or more of the following: network slice information of the first service, identification information of the first service, or information about a data network corresponding to the first service (for example, identification information of a data network corresponding to the first service).

S602: The session management network function establishes, based on the request message, the first GTP-U tunnel that is between a user plane network function and the access network apparatus and that corresponds to the first service.

The session management network function selects, based on the request message, the user plane network function that serves the terminal apparatus. After selecting the user plane network function, the session management network function establishes the first GTP-U tunnel between the user plane network function and the access network apparatus, where the first GTP-U tunnel is used to transmit data of the first service. A process of establishing the first GTP-U tunnel includes the following.

The session management network function or the user plane network function generates (or may be understood as allocating) an uplink TEID (which indicates the user plane network function corresponding to the first GTP-U tunnel); and the session management network function sends an N2 session request message to the access network apparatus, where the N2 session request message includes the uplink TEID of the first GTP-U tunnel and an IP address of the user plane network function. The access network apparatus generates (or may be understood as allocating) a downlink TEID (which indicates the access network apparatus corresponding to the first GTP-U tunnel), and sends the downlink TEID of the first GTP-U tunnel and an IP address of the access network apparatus to the session management network function. The session management network function receives the downlink TEID of the first GTP-U tunnel and the IP address of the access network apparatus from the access network apparatus. The session management network function sends an N4 session establishment request message to the user plane network function, where the N4 session establishment request message includes the downlink TEID and IP address information of the access network apparatus.

In a possible implementation, the session management network function may obtain configuration information (for example, subscription information of the terminal apparatus) from a PCF or a UDM, and generate a packet detection rule (packet detection rule, PDR), a forwarding action rule (forwarding action rule, FAR), and the like based on the configuration information. The PDR and/or the FAR include/includes the downlink TEID and the IP address information of the access network apparatus.

The session management network function sends the PDR and the FAR to the user plane network function, to indicate the user plane network function to process and forward the data packet of the first service according to the PDR and the FAR.

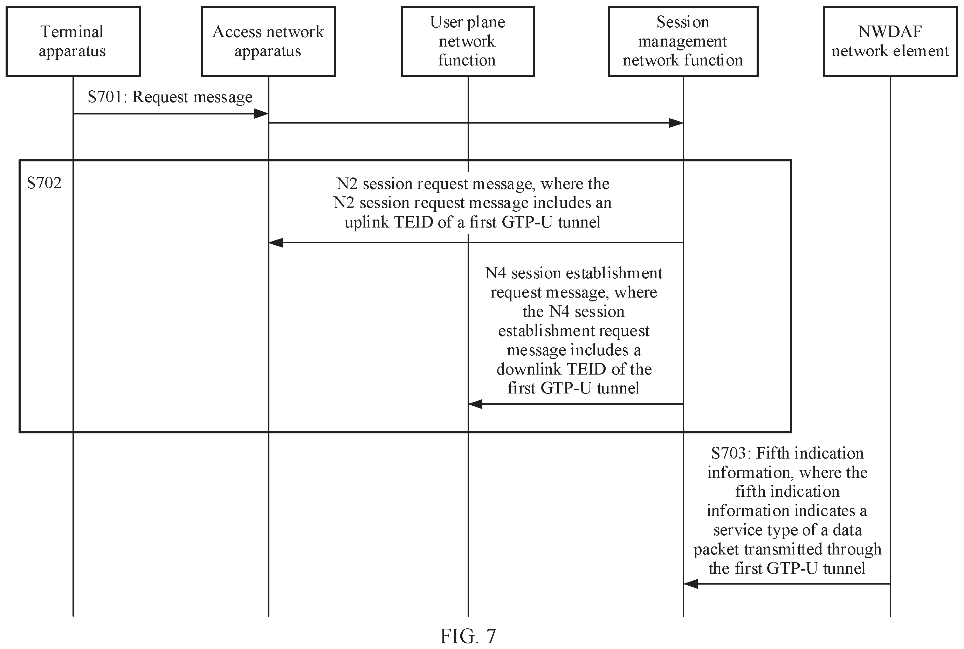

Case 2: The session management network function obtains, after the first GTP-U tunnel is established, the service type corresponding to the first GTP-U tunnel. Specifically, refer to FIG. 7.

S701: The session management network function receives a request message from the terminal apparatus.

When the terminal apparatus has a requirement for performing the first service, the terminal apparatus sends the request message to the session management network function via the access network apparatus, where the request message does not include the service type indication information of the first service. The request message is used to establish a session; or the request message is used to establish a transmission channel between the terminal apparatus and a DN, and the transmission channel includes a DRB between the terminal apparatus and the access network apparatus and a GTP-U tunnel between the access network apparatus and the user plane network function. In an implementation, the request message is a session establishment request message.

S702: The session management network function establishes, based on the request message, the first GTP-U tunnel that is between a user plane network function and the access network apparatus and that corresponds to the first service.

For a specific implementation of S702, refer to the foregoing description of the specific implementation of S602. Details are not described herein again. It may be understood that a difference between S702 and S602 is that: Before S602 is completed, the user plane network function already learns of the service type corresponding to the first GTP-U, but when S702 is completed, the user plane network function still does not learn of the service type corresponding to the first GTP-U.

S703: The session management network function receives fifth indication information from an NWDAF network element, where the fifth indication information indicates a service type of a data packet transmitted through the first GTP-U tunnel.

The NWDAF network element obtains a downlink data packet to be transmitted through the first GTP-U tunnel, and analyzes the downlink data packet to obtain a service type of the downlink data packet transmitted through the first GTP-U tunnel. Further, the NWDAF network element sends the fifth indication information to the session management network function, to indicate the service type corresponding to the first GTP-U tunnel. In a possible implementation, when sending the fifth indication information to the session management network function, the NWDAF network element further sends information (for example, an uplink TEID or a downlink TEID) about the first GTP-U tunnel.

In a possible implementation, that the NWDAF network element obtains the downlink data packet to be transmitted through the first GTP-U tunnel includes: The NWDAF receives the data packet transmitted through the first GTP-U tunnel sent by the user plane network function.

In a possible implementation, the user plane network function directly sends, to the NWDAF network element, the data packet transmitted through the first GTP-U tunnel. Further, the NWDAF network element analyzes the data packet to obtain a service type corresponding to the first GTP-U tunnel (that is, a service type of the data packet). The NWDAF network element obtains the correspondence between the user plane network function and the session management network function, and sends the fifth indication information to the session management network function (which may also be understood as the session management network function that establishes the first GTP-U tunnel).

In another possible implementation, the user plane network function may send, to the NWDAF network element via another network function (for example, the session management network function or another user plane network function), the data packet transmitted through the first GTP-U tunnel. In other words, the user plane network function sends, to the another network function, the data packet transmitted through the first GTP-U tunnel, and then the another network function sends, to the NWDAF network element, the data packet transmitted through the first GTP-U tunnel. Further, the NWDAF network element analyzes the data packet to obtain the service type corresponding to the first GTP-U tunnel, and sends the fifth indication information to the session management network function.

With reference to this possible implementation, the following further describes several transmission occasions on which the user plane network function sends, to the NWDAF network element, the data packet transmitted through the first GTP-U tunnel.

In a first transmission occasion, if the user plane network function obtains the data packet to be transmitted through the first GTP-U tunnel, the user plane network function sends the data packet to the NWDAF network element.

Optionally, after the NWDAF network element obtains the service type corresponding to the first GTP-U tunnel, the NWDAF network element may further send sixth indication information to the user plane network function, where the sixth indication information indicates the user plane network function to stop sending, to the NWDAF network element, the data packet transmitted through the first GTP-U tunnel.

In a second transmission occasion, when a trigger condition is met, the user plane network function sends, to the NWDAF network element, the data packet transmitted through the first GTP-U tunnel.

In an example, the trigger condition may be that the user plane network function detects network congestion. In other words, if the user plane network function perceives network congestion (for example, the user plane network function perceives network congestion by using an indication of the access network apparatus), the user plane network function sends the data packet to the NWDAF network element.

In another example, the trigger condition is that the user plane network function detects that the user plane network function is in a first time period. The first time period may be a preconfigured time period. The preconfigured time period is a time period in which the user plane network function sends, to the NWDAF network element, the data packet transmitted through the first GTP-U tunnel. For example, generally, 18:00 to 21:00 is a time period in which network congestion is likely to occur. In this case, the first time period may be set to 18:00 to 21:00. In other words, in the time period corresponding to 18:00 to 21:00, the user plane network function sends the data packet to the NWDAF network element. In another time period other than the first time period, the user plane network function does not send the data packet to the NWDAF network element.

S502: The session management network function sends third indication information to the user plane network function based on the service type, where the third indication information indicates to add scheduling indication information to the data packet transmitted through the first GTP-U tunnel.

In the embodiment in which FIG. 4 and FIG. 5 are combined, S502 is performed before S401. In other words, after obtaining the service type corresponding to the first GTP-U tunnel, the session management network function sends the third indication information to the user plane network function based on the service type. Subsequently, the user plane network function generates the first data packet based on an indication of the third indication information.

In a possible implementation, the session management network function may obtain configuration information (for example, subscription information of the terminal apparatus) from the PCF or the UDM, and determine, based on the configuration information, whether to add the scheduling indication information to the data transmitted through the first GTP-U tunnel corresponding to the service type. In other words, this may be understood as determining, based on the configuration information, whether to generate the third indication information. When determining to add the scheduling indication information to the data transmitted through the first GTP-U tunnel corresponding to the service type, the session management network function sends the third indication information to the user plane network function. When determining not to add the scheduling indication information to the data transmitted through the first GTP-U tunnel corresponding to the service type, the session management network function does not send the third indication information to the user plane network function.

For example, a service type corresponding to a GTP-U tunnel #3 is an XR service, and has a high requirement on bandwidth and latency (that is, has a transmission requirement of high bandwidth and low latency). A service type corresponding to a GTP-U tunnel #4 is a common service (for example, a common text data transmission service), and has a low requirement on bandwidth. In this case, the session management network function may send the third indication information to a user plane network function corresponding to the GTP-U tunnel #3, to indicate to add, before the data packet is subsequently transmitted through the GTP-U tunnel #3, scheduling indication information corresponding to the XR service to the data packet. The session management network function does not send the third indication information to a user plane network function corresponding to a GTP-U tunnel #4.

In a possible implementation in which the session management network function sends the third indication information, after the first GTP-U tunnel is established, that is, after the session management network function sends the downlink TEID of the first GTP-U tunnel and the IP address of the access network apparatus to the user plane network function by using the N4 session establishment request message, the session management network function sends a processing forwarding rule update message (for example, an N4 session update request message) to the user plane network function, where the processing forwarding rule update message includes the third indication information. Alternatively, in another possible implementation in which the session management network function sends the third indication information, in a process of establishing the first GTP-U tunnel, when the session management network function sends the downlink TEID of the first GTP-U tunnel and the IP address of the access network apparatus to the user plane network function by using the N4 session establishment request message, the N4 session establishment request message further includes the third indication information.

It should be noted that, in this application, an indication field (referred to as a first field below for ease of description) corresponding to the third indication information may be different from an indication field (referred to as a second field below for ease of description) corresponding to the PDR and the FAR. The first field and the second field may alternatively be a same field. This is not specifically limited in this application. When the first field is different from the second field, in addition to indicating the third indication information, the first field may further indicate a protocol layer location at which the scheduling indication information is added (for example, indicate that the scheduling indication information is encapsulated in a layer header of the GTP-U layer). When the first field and the second field are a same field, it may be understood that, on a basis that the second field is used to indicate the PDR and the FAR, the second field may further indicate the third indication information.

Optionally, as shown in S503 in FIG. 5, in a possible implementation, the session management network function may further send first indication information to the access network apparatus based on the service type, where the first indication information indicates the access network apparatus to schedule and transmit, based on the scheduling indication information, the data packet transmitted through the first GTP-U tunnel. In other words, when the session management network function determines, based on the service type, to add the scheduling indication information (that is, send the third indication information to the user plane network function) to the data transmitted through the first GTP-U tunnel corresponding to the service type, the session management network function may further indicate, to the access network apparatus, to schedule and transmit (that is, send the first indication information), based on the scheduling indication information, the data packet transmitted through the first GTP-U tunnel.

It should be noted that scheduling and transmitting the data packet based on the scheduling indication information in this application may be understood as scheduling and transmitting a payload part of the data packet based on the scheduling indication information.

In a possible implementation in which the session management network function sends the first indication information, after the first GTP-U tunnel is established, that is, after the session management network function sends the uplink TEID of the first GTP-U tunnel and the IP address of the user plane network function to the access network apparatus by using the N2 session request message, the session management network function sends the first indication information to the access network apparatus. This possible implementation helps improve flexibility of a sending occasion of the first indication information. Alternatively, in another possible implementation in which the session management network function sends the first indication information, in a process of establishing the first GTP-U tunnel, when the session management network function sends the uplink TEID of the first GTP-U tunnel and the IP address of the user plane network function to the access network apparatus by using the N2 session request message, the N2 session request message further includes the first indication information. This possible implementation helps improve efficiency of sending the first indication information by the session management network function.

Optionally, as shown in S504 in FIG. 5, in a possible implementation, the session management network function may further send second indication information to the access network apparatus based on the service type, where the second indication information indicates to send congestion indication information to the user plane network function or the terminal apparatus when network congestion occurs.

For example, when the session management network function determines, based on the service type, to add the scheduling indication information (that is, send the third indication information to the user plane network function) to the data transmitted through the first GTP-U tunnel corresponding to the service type, the session management network function may further indicate, to the access network apparatus, to send the congestion indication information (that is, send the second indication information) to the user plane network function or the terminal apparatus in the case of network congestion. When the session management network function determines, based on the service type, not to send the third indication information to the user plane network function, the access network device does not need to send the congestion indication information to the user plane network function or the terminal apparatus.

In a possible implementation in which the session management network function sends the second indication information, after the first GTP-U tunnel is established, that is, after the session management network function sends the uplink TEID of the first GTP-U tunnel and the IP address of the user plane network function to the access network apparatus by using the N2 session request message, the session management network function sends the second indication information to the access network apparatus. Alternatively, in another possible implementation in which the session management network function sends the second indication information, in a process of establishing the first GTP-U tunnel, when the session management network function sends the uplink TEID of the first GTP-U tunnel and the IP address of the user plane network function to the access network apparatus by using the N2 session request message, the N2 session request message further includes the second indication information.

In conclusion, in the data scheduling and transmission process described in FIG. 5, the session management network function indicates, based on the service type, the user plane network function to add scheduling indication information to a data packet transmitted through a specific tunnel (for example, the first GTP-U tunnel mentioned in this application). There is a correspondence between the scheduling indication information and the service type. The scheduling indication information indicates subsequent air interface transmission of a data packet of the service. This helps improve flexibility of data transmission over an air interface, and helps meet transmission requirements of different services in a communication system.

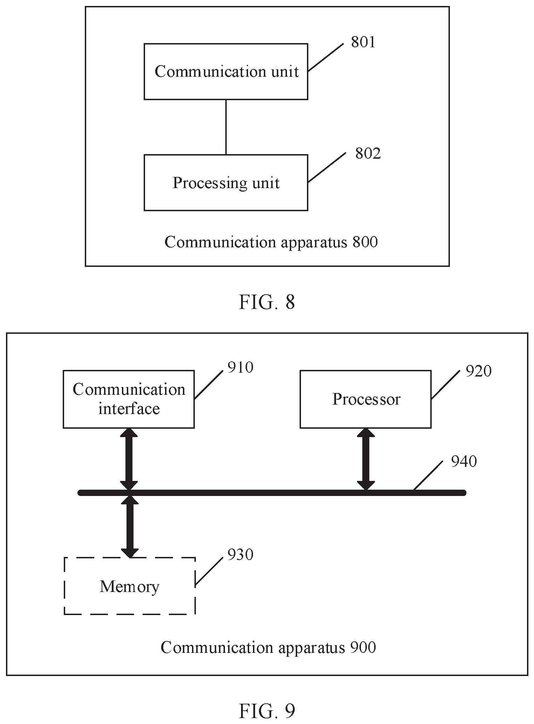

FIG. 8 is a diagram of a structure of a communication apparatus 800 according to an embodiment of this application. The communication apparatus shown in FIG. 8 may be an access network device, an apparatus in an access network device, or an apparatus that can be used in a matching manner with the access network device. Alternatively, the communication apparatus shown in FIG. 8 may be a user plane network function, an apparatus in a user plane network function, or an apparatus that can be used in a matching manner with the user plane network function. The communication apparatus shown in FIG. 8 may be a session management network function, an apparatus in a session management network function, or an apparatus that can be used in a matching manner with the session management network function. The communication apparatus shown in FIG. 8 may include a communication unit 801 and a processing unit 802. Specifically, the processing unit 802 is configured to process data. The data may be data received by the communication unit 801, and the processed data may also be sent by the communication unit 801.

In an implementation, when the communication apparatus 800 is the access network device, the apparatus in the access network device, or the apparatus that can be used in the matching manner with the access network device,
the communication unit 801 is configured to receive a first data packet from a user plane network function through a first general packet radio service tunneling protocol for a user plane GTP-U tunnel, where the first data packet includes scheduling indication information, and there is a correspondence between the scheduling indication information and a service type of the first data packet. The processing unit 802 is configured to invoke the communication unit 801 to send a second data packet to a terminal apparatus based on the scheduling indication information, where the second data packet includes data in the first data packet.

In a possible implementation, the communication unit 801 is further configured to receive first indication information from a session management network function, where the first indication information indicates that scheduling and transmission are performed on a data packet transmitted through the first GTP-U tunnel based on the scheduling indication information.

In a possible implementation, the communication unit 801 is further configured to receive an N2 session request message from the session management network function, where the N2 session request message includes first indication information.

In a possible implementation, the communication unit 801 is further configured to receive second indication information from the session management network function, where the second indication information indicates to send congestion indication information to the user plane network function or the terminal apparatus when network congestion occurs.

In a possible implementation, the communication unit 801 is further configured to receive the N2 session request message from the session management network function, where the N2 session request message includes the second indication information.

In a possible implementation, the congestion indication information is included in a service data adaptation protocol SDAP layer or a GTP-U layer.

In a possible implementation, the GTP-U layer of the first data packet includes the scheduling indication information.

In a possible implementation, the scheduling indication information includes scheduling priority information and/or service type information.

In a possible implementation, the service type information is related to a scheduling configuration.

In an implementation, when the communication apparatus 800 shown in FIG. 8 is the user plane network function, the apparatus in the user plane network function, or the apparatus that can be used in the matching manner with the user plane network function,
the processing unit 802 is configured to generate, by a user plane network function, a first data packet, where the first data packet includes scheduling indication information, and there is a correspondence between the scheduling indication information and a service type of the first data packet. The communication unit 801 is configured to send the first data packet to the access network apparatus through a first general packet radio service tunneling protocol for a user plane GTP-U tunnel.

In a possible implementation, the communication unit 801 is further configured to receive third indication information from a session management network function, where the third indication information indicates to add the scheduling indication information to a data packet transmitted through the first GTP-U tunnel.

In a possible implementation, the communication unit 801 is further configured to receive an N4 session establishment request message from the session management network function, where the N4 session establishment request message includes the third indication information.

In a possible implementation, the communication unit 801 is further configured to send the data packet transmitted through the first GTP-U tunnel to a network data analysis function NWDAF network element.

In a possible implementation, when a trigger condition is met, the communication unit 801 is further configured to send, by the user plane network function, the data packet transmitted through the first GTP-U tunnel to the network data analysis function NWDAF network element when a trigger condition is met, where the trigger condition includes: The user plane network function detects network congestion; or the user plane network function detects that a first time period is in progress.

In a possible implementation, the communication unit 801 is further configured to send the data packet transmitted through the first GTP-U tunnel to the network data analysis function NWDAF network element via the session management network function.

In a possible implementation, the GTP-U layer of the first data packet includes the scheduling indication information.

In a possible implementation, the scheduling indication information includes scheduling priority information and/or service type information.

In a possible implementation, the service type information is related to a scheduling configuration.

In an implementation, when the communication apparatus 800 shown in FIG. 8 is the session management network function, the apparatus in the session management network function, or the apparatus that can be used in the matching manner with the session management network function,
the communication unit 801 is configured to obtain a service type corresponding to a first general packet radio service tunneling protocol for a user plane GTP-U tunnel. The processing unit 802 is configured to invoke the communication unit 801 based on the service type, and send third indication information to a user plane network function, where the third indication information indicates to add scheduling indication information to a data packet transmitted through the first GTP-U tunnel.

In a possible implementation, the processing unit 802 is further configured to invoke the communication unit 801 based on the service type, and send an N4 session establishment request message to the user plane network function, where the N4 session establishment request message includes the third indication information.

In a possible implementation, the processing unit 802 is further configured to invoke the communication unit 801 based on the service type, and send first indication information to the access network apparatus, where the first indication information indicates that scheduling and transmission are performed on the data packet transmitted through the first GTP-U tunnel based on the scheduling indication information.

In a possible implementation, the processing unit 802 is further configured to invoke the communication unit 801 based on the service type, and send an N2 session request message to the access network apparatus, where the N2 session request message includes the first indication information.

In a possible implementation, the processing unit 802 is further configured to invoke the communication unit 801 based on the service type, and send second indication information to the access network apparatus, where the second indication information indicates to send congestion indication information to the user plane network function or the terminal apparatus when network congestion occurs.

In a possible implementation, the processing unit 802 is further configured to invoke the communication unit 801 based on the service type, and send the N2 session request message to the access network apparatus, where the N2 session request message includes the second indication information.

In a possible implementation, the communication unit 801 is further configured to receive a session establishment request message from the terminal apparatus, where the session establishment request message includes service type indication information of the first service; and the processing unit 802 is further configured to establish, based on the session establishment request message, the first GTP-U tunnel that is between the user plane network function and the access network apparatus and that corresponds to the first service.

In a possible implementation, the service type indication information includes one or more of the following: network slice information of the first service, identification information of the first service, or information about a data network corresponding to the first service.

In a possible implementation, the communication unit 801 is further configured to receive fifth indication information from a network data analysis function NWDAF network element, where the fifth indication information indicates a service type of the data packet transmitted through the first GTP-U tunnel.

For specific descriptions of implementing the data scheduling and transmission method provided in this application by the communication unit 801 and the processing unit 802, refer to the foregoing related descriptions in FIG. 4 to FIG. 7.

FIG. 9 shows a communication apparatus 900 according to an embodiment of this application. The communication apparatus 900 is configured to implement functions of the foregoing access network device, user plane network function, or session management network function. The apparatus may be an access network device or an apparatus used in an access network device; the apparatus may be a user plane network function or an apparatus used in a user plane network function; or the apparatus may be a session management network function or an apparatus used in a session management network function. An apparatus used in a device (for example, an access network device, a user plane network function, or a session management network function) may be a chip system or a chip in the device. The chip system may include a chip, or may include a chip and another discrete device.

The communication apparatus 900 includes at least one processor 920, configured to implement a data transmission function of the device (for example, the access network device, the user plane network function, or the session management network function) in the method provided in embodiments of this application. The communication apparatus 900 may further include a communication interface 910, configured to implement a receiving and sending operation of the device (for example, the access network device, the user plane network function, or the session management network function) in the method provided in embodiments of this application. In embodiments of this application, the communication interface may be a transceiver, a circuit, a bus, a module, or another type of communication interface, and is configured to communicate with another device through a transmission medium. For example, the communication interface 910 is used by an apparatus in the communication apparatus 900 to communicate with the another device. The processor 920 receives and sends data through the communication interface 910, and is configured to implement the methods in the foregoing method embodiments.

In a possible implementation, the communication apparatus 900 may further include at least one memory 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions stored in the memory 930. At least one of the at least one memory may be included in the processor.

This embodiment of this application does not limit a specific connection medium between the communication interface 910, the processor 920, and the memory 930. In this embodiment of this application, in FIG. 9, the memory 930, the processor 920, and the communication interface 910 are connected through a bus 940, and the bus is represented using a bold line in FIG. 9. A connection manner between other components is merely an example for description, and imposes no limitation. The bus may be classified into an address bus, a data bus, a control bus, and the like. For ease of representation, only one thick line is used to represent the bus in FIG. 9, but this does not mean that there is only one bus or only one type of bus.

When the communication apparatus 900 is specifically the apparatus used for a device (for example, the access network device, the user plane network function, or the session management network function), for example, when the communication apparatus 900 is specifically a chip or a chip system, the communication interface 910 may output or receive a baseband signal. When the communication apparatus 900 is specifically the device (for example, the access network device, the user plane network function, or the session management network function), the communication interface 910 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

An embodiment of this application further provides a computer-readable storage medium. The computer-readable storage medium stores computer-executable instructions. When the computer-executable instructions are executed, the method performed by the access network apparatus, the user plane network function, or the session management network function in the foregoing method embodiments is implemented.

An embodiment of this application further provides a computer program product. The computer program product includes a computer program. When the computer program is executed, the method performed by the access network apparatus, the user plane network function, or the session management network function in the foregoing method embodiments is implemented.

An embodiment of this application further provides a communication system. The communication system includes an access network apparatus, a user plane network function, and a session management network function. The access network apparatus is configured to perform the method performed by the access network apparatus in the foregoing method embodiments. The user plane network function is configured to perform the method performed by the user plane network function in the foregoing method embodiments. The session management network function is configured to perform the method performed by the session management network function in the foregoing method embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

The descriptions of the embodiments provided in this application may refer to each other, and the descriptions of the embodiments have different focuses. For a part not described in detail in an embodiment, refer to related descriptions of another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended to describe the technical solutions of this application, rather than limit this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A data scheduling and transmission method, wherein the method comprises:
receiving, by an access network apparatus, a first data packet from a user plane network function through a first general packet radio service tunneling protocol for a user plane GTP-U tunnel, wherein the first data packet comprises scheduling indication information, and there is a correspondence between the scheduling indication information and a service type of the first data packet; and
sending, by the access network apparatus, a second data packet to a terminal apparatus based on the scheduling indication information, wherein the second data packet comprises data in the first data packet.

2. The method according to claim 1, wherein the method further comprises:
receiving, by the access network apparatus, first indication information from a session management network function, wherein the first indication information indicates that scheduling and transmission are performed on a data packet transmitted through the first GTP-U tunnel based on the scheduling indication information.

3. The method according to claim 2, wherein receiving, by the access network apparatus, the first indication information from the session management network function comprises:
receiving, by the access network apparatus, an N2 session request message from the session management network function, wherein the N2 session request message comprises the first indication information.

4. The method according to any one of claims 1 to 3, wherein the method further comprises:
receiving, by the access network apparatus, second indication information from the session management network function, wherein the second indication information indicates to send congestion indication information to the user plane network function or the terminal apparatus when network congestion occurs.

5. The method according to claim 4, wherein receiving, by the access network apparatus, the second indication information from the session management network function comprises:
receiving, by the access network apparatus, the N2 session request message from the session management network function, wherein the N2 session request message comprises the second indication information.

6. The method according to claim 4 or 5, wherein the congestion indication information is comprised in a service data adaptation protocol SDAP layer or a GTP-U layer.

7. The method according to any one of claims 1 to 6, wherein the GTP-U layer of the first data packet comprises the scheduling indication information.

8. The method according to any one of claims 1 to 7, wherein the scheduling indication information comprises scheduling priority information and/or service type information.

9. The method according to claim 8, wherein the service type information is related to a scheduling configuration.

10. A data scheduling and transmission method, wherein the method comprises:
generating, by a user plane network function, a first data packet, wherein the first data packet comprises scheduling indication information, and there is a correspondence between the scheduling indication information and a service type of the first data packet; and
sending, by the user plane network function, the first data packet to an access network apparatus through a first general packet radio service tunneling protocol for a user plane GTP-U tunnel.

11. The method according to claim 10, wherein the method further comprises:
receiving, by the user plane network function, third indication information from a session management network function, wherein the third indication information indicates to add the scheduling indication information to a data packet transmitted through the first GTP-U tunnel.

12. The method according to claim 11, wherein receiving, by the user plane network function, the third indication information from the session management network function comprises:
receiving, by the user plane network function, an N4 session establishment request message from the session management network function, wherein the N4 session establishment request message comprises the third indication information.

13. The method according to claim 11 or 12, wherein before receiving, by the user plane network function, the third indication information from the session management network function, the method further comprises:
sending, by the user plane network function, the data packet transmitted through the first GTP-U tunnel to a network data analysis function NWDAF network element.

14. The method according to claim 13, wherein sending, by the user plane network function, the data packet transmitted through the first GTP-U tunnel to the network data analysis function NWDAF network element comprises:
sending, by the user plane network function, the data packet transmitted through the first GTP-U tunnel to the network data analysis function NWDAF network element when a trigger condition is met, wherein
the trigger condition comprises: detecting, by the user plane network function, network congestion; or detecting, by the user plane network function, that a first time period is in progress.

15. The method according to claim 13 or 14, wherein sending, by the user plane network function, the data packet transmitted through the first GTP-U tunnel to the network data analysis function NWDAF network element comprises:
sending, by the user plane network function, the data packet transmitted through the first GTP-U tunnel to the network data analysis function NWDAF network element via the session management network function.

16. The method according to any one of claims 10 to 15, wherein the GTP-U layer of the first data packet comprises the scheduling indication information.

17. The method according to any one of claims 10 to 16, wherein the scheduling indication information comprises scheduling priority information and/or service type information.

18. The method according to claim 17, wherein the service type information is related to a scheduling configuration.

19. A data scheduling and transmission method, wherein the method comprises:
obtaining, by a session management network function, a service type corresponding to a first general packet radio service tunneling protocol for a user plane GTP-U tunnel; and
sending, by the session management network function, third indication information to a user plane network function based on the service type, wherein the third indication information indicates to add scheduling indication information to a data packet transmitted through the first GTP-U tunnel.

20. The method according to claim 19, wherein sending, by the session management network function, the third indication information to the user plane network function based on the service type comprises:
sending, by the session management network function, an N4 session establishment request message to the user plane network function based on the service type, wherein the N4 session establishment request message comprises the third indication information.

21. The method according to claim 19 or 20, wherein the method further comprises:
sending, by the session management network function, the first indication information to an access network apparatus based on the service type, wherein the first indication information indicates that scheduling and transmission are performed on the data packet transmitted through the first GTP-U tunnel based on the scheduling indication information.

22. The method according to claim 21, wherein sending, by the session management network function, the first indication information to the access network apparatus based on the service type comprises:
sending, by the session management network function, an N2 session request message to the access network apparatus based on the service type, wherein the N2 session request message comprises the first indication information.

23. The method according to any one of claims 19 to 22, wherein the method further comprises:
sending, by the session management network function, second indication information to the access network apparatus based on the service type, wherein the second indication information indicates to send congestion indication information to the user plane network function or a terminal apparatus when network congestion occurs.

24. The method according to claim 23, wherein sending, by the session management network function, the second indication information to the access network apparatus based on the service type comprises:
sending, by the session management network function, the N2 session request message to the access network apparatus based on the service type, wherein the N2 session request message comprises the second indication information.

25. The method according to any one of claims 19 to 24, wherein obtaining, by the session management network function, the service type corresponding to the first general packet radio service tunneling protocol for the user plane GTP-U tunnel comprises:
receiving, by the session management network function, a session establishment request message from the terminal apparatus, wherein the session establishment request message comprises service type indication information of a first service; and
the method further comprises:
establishing, by the session management network function based on the session establishment request message, the first GTP-U tunnel that is between the user plane network function and the access network apparatus and that corresponds to the first service.

26. The method according to claim 25, wherein the service type indication information comprises one or more of the following: network slice information of the first service, identification information of the first service, or information about a data network corresponding to the first service.

27. The method according to any one of claims 19 to 24, wherein obtaining, by the session management network function, the service type corresponding to the first general packet radio service tunneling protocol for the user plane GTP-U tunnel comprises:
receiving, by the session management network function, fifth indication information from a network data analysis function NWDAF network element, wherein the fifth indication information indicates a service type of the data packet transmitted through the first GTP-U tunnel.

28. A communication apparatus, comprising a function or a unit configured to perform the method according to any one of claims 1 to 9, perform the method according to any one of claims 10 to 18, or perform the method according to any one of claims 19 to 27.

29. A communication apparatus, comprising a processor, wherein the processor is configured to invoke a computer program stored in a memory, so that the communication apparatus implements the method according to any one of claims 1 to 9, the processor is configured to implement the method according to any one of claims 10 to 18, or the processor is configured to implement the method according to any one of claims 19 to 27.

30. The communication apparatus according to claim 29, further comprising the memory.

31. A communication apparatus, comprising a processor and an interface circuit, wherein the interface circuit is configured to input and/or output a signal, and the processor is configured to implement the method according to any one of claims 1 to 9, implement the method according to any one of claims 10 to 18, or implement the method according to any one of claims 19 to 27 by using a logic circuit and/or executing code instructions.

32. A computer-readable storage medium, wherein the storage medium stores a computer program or instructions, and when the computer program or the instructions is/are executed by a communication apparatus, the method according to any one of claims 1 to 9, the method according to any one of claims 10 to 18, or the method according to any one of claims 19 to 27 is implemented.

33. A computer program product, wherein when a computer reads and executes the computer program product, the method according to any one of claims 1 to 9 is implemented, the method according to any one of claims 10 to 18 is implemented, or the method according to any one of claims 19 to 27 is implemented.

34. A communication system, comprising a user plane network function and a session management network function, wherein the user plane network function is configured to perform the method according to any one of claims 10 to 18, and the session management network function is configured to perform the method according to any one of claims 19 to 27.

35. The communication system according to claim 34, further comprising an access network apparatus, wherein the access network apparatus is configured to perform the method according to any one of claims 1 to 9.
